# EUROPÄISCHE PATENTANMELDUNG

(11) **EP 1 523 146 A2**
(43) Veröffentlichungstag der Anmeldung: **13.04.2005**
(21) Anmeldenummer: 04022606.0
(22) Anmeldetag: 22.09.2004
(51) Int. Cl.: H04L 27/38

(54) **Verfahren zum Synchronisieren einer Schaltungsanordnung beim Empfang eines modulierten Signals**

(30) Priorität: 08.10.2003 DE 10347259
(71) Anmelder: Micronas GmbH, 79108 Freiburg (DE)
(72) Erfinder: Bock, Christian, Dr., 79108 Freiburg (DE)
(74) Vertreter: Patentanwälte Westphal, Mussgnug & Partner

(57) **Zusammenfassung**

Die Erfindung bezieht sich auf ein Verfahren zum Synchronisieren einer Schaltungsanordnung (1) beim Empfang eines in den mehrdimensionalen komplexen Signalraum gemischten, modulierten Signals (sa, sd, A ) in insbesondere einem QAM-Empfänger, bei dem mit einem Entscheider (15, 15', 15*) durch Analyse des Empfangssignals im komplexen Koordinatenraum (I, Q) unter Verwendung von Regelungsparametern (ΔR, ρ, tᵢ) ein Symbol (S) entschieden wird und zumindest einer der Regelungsparameter (ΔR, ρ, tᵢ) für spätere Entscheidungen angepasst wird.

Zur Verbesserung des Verfahrens, insbesondere schnelleren Bereitstellung eines entschiedenen Symbols ohne lange Verzögerungen durch die Komponenten der Regelungsschleife wird vorgeschlagen, dass dem Entscheider (15',15*) ein vorläufiger, insbesondere geschätzter Korrekturwinkel für eine momentane Rotation unabhängig von einer Regelung eines lokalen Oszillators als Regelungsparameter (ρ) zugeführt wird.

## Beschreibung

Die Erfindung bezieht sich auf ein Verfahren zum Synchronisieren einer Schaltungsanordnung beim Empfang eines in den mehrdimensionalen komplexen Signalraum gemischten, modulierten Signals gemäß den oberbegrifflichen Merkmalen des Patentanspruchs 1 bzw. eine Schaltungsanordnung zum Durchführen eines solchen Verfahrens.

In einem üblichen Empfänger zum Empfang digitaler Signale, die gemäß einem Quadratur-Amplituden-Modulationsverfahren (QAM) oder einem PSK-Verfahren (PSK: Phase Shift Keying) zweidimensional moduliert wurden, mischt ein komplexer Multiplizierer oder Mischer, der von einem Lokaloszillator angesteuert wird, das empfangene, auf einen Träger modulierte Signal frequenz- und phasenrichtig in das Basisband der Schaltungsanordnung. Eine phasengekoppelte Schleife (PLL: Phase Locked Loop / phasengekoppelte Schleife) sorgt für die richtige Frequenz und Phase des Lokaloszillators zum Mischen. Bei einer digitalen Verarbeitung kann das Mischen vor oder nach einer A/D-Umsetzung (A/D: Analog/Digital) erfolgen. Das Signal wird hierzu entweder mit dem Symboltakt oder einem Vielfachen davon abgetastet und digitalisiert oder der Digitalisierungstakt wird gegenüber dem erforderlichen Symboltakt freilaufend gelassen. In diesem Fall wird das Signal über eine rein digitale Abtastratenwandlung auf den Symboltakt oder ein Vielfaches davon umgesetzt. Verstärkungsregelungen sorgen dafür, dass der jeweilige Aussteuerbereich ausgenutzt wird und dass die empfangenen Signale richtig auf die Symbolentscheiderstufe abgebildet werden. Ein adaptiver Entzerrer (Equalizer) vermindert die Intersymbolinterferenz, die in Verzerrungen des Senders, der Übertragungsstrecke oder des Empfängers ihren Ursprung hat.

Bei vielen Demodulatoren für QAM- oder PSK-Signale benötigen die Regelschaltungen für die Frequenz- und Phasenregelung des Lokaloszillators, für die Verstärkungsregelung, für die Rückgewinnung des Symboltaktes und/oder für den adaptiven Entzerrer sowohl die empfangenen Signale als auch diejenigen Elemente des vorgegebenen Symbolalphabets, die von einer Entscheiderstufe als wahrscheinlichste angesehen werden. Diese Art der Regelungen über die Unterschiede zwischen empfangenem und entschiedenem Symbolstrom werden als entscheidungsrückgekoppelte Regelungen bezeichnet. Ihre Anwendung setzt im Wesentlichen korrekte Entscheidungen voraus.

Dabei wird üblicherweise eine Entscheidung benutzt, welche in der komplexen I/Q-Ebene die empfangenen Signale nach dem geringsten Abstand Sollsymbolen zuordnet. Sind die Sollsymbole auf einem gleichmäßigen Gitter bzw. Raster angeordnet, entsteht ein Gitter- bzw. Kästchenmuster für die Entscheidungen.

Da bei den Demodulatoren nach dem Stand der Technik die entscheidungsrückgekoppelten Regelungen miteinander verkoppelt sind, ist das Einrasten schwierig, solange die Regelung für den Träger des Lokaloszillators, der das Empfangssignal in das Basisband mischt, frequenz- und phasenmäßig noch nicht stabil ist und damit Fehlentscheidungen auftreten. Oft gelingt das Einrasten nur, wenn Frequenz und Phase relativ dicht bei ihren Sollwerten liegen.

Ist die Trägerphase, insbesondere bei höherwertigen Modulationsverfahren, nur wenige Grad von der Sollphase entfernt, werden die Symbole insbesondere im mittleren und äußeren Radienbereich häufig falsch entschieden. Bei 256-QAM genügt bereits eine Abweichung von ca. 3 Grad, um falsche Entscheidungen zu treffen.

Die Differenz der Phase des empfangenen Signals und der Phase des entschiedenen Symbols wird als Regelspannung für die Trägerregelüng verwendet.

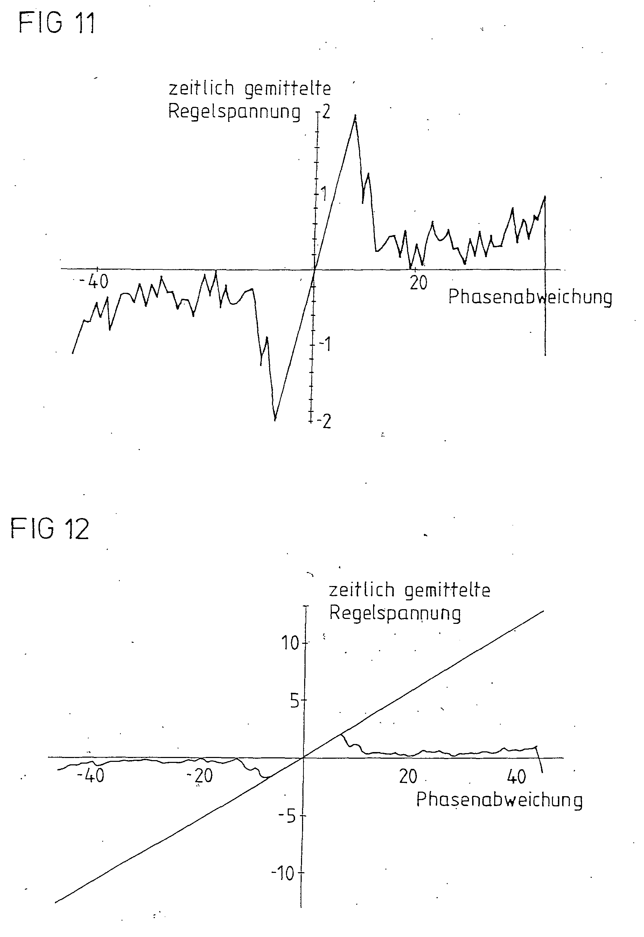

Fig. 11 zeigt die zeitlich gemittelte Regelspannnung über die Abweichung von der Phasenlage des empfangenen Signals zur Phasenlage des Lokaloszillators. Es ist leicht zu erkennen, dass nur im einem Zentralbereich immer richtige Einzelentscheidungen getroffen werden, die zu der aufsteigenden Geraden führen. Außerhalb des Zentralbereiches ist von fehlerhaften Einzelentscheidungen auszugehen, die aber im zeitlichen Mittel doch zumindest zum richtigen Vorzeichen führen.

Fig. 12 zeigt diese Regelspannung in einem anderen Maßstab zusammen mit einer Geraden, die einer idealen Regelspannung entsprechen würde. Diese ideale Regelspannung ist im gesamten Bereich proportional zur Phasenabweichung.

Aus EP 0571788 A2 ist eine Träger- und Phasenregelung bekannt, bei welcher nur die inneren vier Symbole der I/Q-Ebene mit einer zusätzlichen Hysterese im Rahmen einer reduzierten Konstellation verwendet werden. Bei höherwertigen Modulationsverfahren mit einer gleichmäßigen Symbolverteilung hat die Häufigkeit dieser Symbole jedoch nur einen sehr geringen Anteil, bei gleich verteiltem 256-QAM beispielsweise nur ca. 1,6%.

Aus US 5,471,508 ist eine Tracking- bzw. Nachführungsbetriebsart bekannt, mittels der die Regelung mit einem reduzierten Symbolalphabet in der I/Q-Ebene arbeitet, wobei nur große Radien betrachtet werden.

Aus DE 199 28 206 A1 ist ein Verfahren bekannt, bei dem die komplexe I/Q-Ebene in kleinere Quadrate aufgeteilt wird, wodurch eine eindeutigere mittlere Regelspannung erhalten werden kann. Dieses Verfahren macht jedoch den Einsatz großer Tabellen erforderlich, ohne dabei das grundsätzliche Problem zu beseitigen.

Bei einem Verfahren aus DE 41 00 099 C1 werden nur die Ecken des I/Q-Symbolalphabets betrachtet, wodurch wiederum viele Symbole verloren gehen.

EP 0249045 B1 (US 4,811,363, DE 36 19 744 A1) schlägt ein Verfahren mit einer grundsätzlicheren Vorgehensweise vor, bei dem eine zweistufige Entscheidung vollzogen wird. In einem ersten Schritt wird für einen Sollradius entschieden und danach in einem zweiten Schritt auf diesem entschiedenen Sollradius dann der wahrscheinlichste Sollphasenpunkt angenommen. Für Phasenkonstellationen von 16-QAM funktioniert ein solches Verfahren noch in akzeptablem Maß. Bei Betrachtung einer 64-QAM-Ebene sind jedoch 9 Radien zu berücksichtigen, die teilweise sehr eng benachbart liegen. Bei 64-QAM liegen die Radiengrenzen und Phasengrenzen für ein Symbol bereits so dicht beieinander, so dass insbesondere bei additivem Rauschen gute Radienentscheidungen kaum erhalten werden können. Bei 256-QAM liegen die Radien so dicht beieinander, dass Radienentscheidungen allenfalls äußerst bedingt in einem ausreichend guten Maße zu erhalten sind.

Das Problem der korrekten Bestimmung der Phasenabweichung würde nicht existieren, wenn zu jedem Zeitpunkt die Phasenabweichung maximal so groß wie der Zentralbereich von Fig. 11 wäre, in welchem die Phasenabweichungen immer richtig gemessen werden. Eine so schnell einrastende Regelung, die bei einem Frequenzoffset auch schon die erste vorbeiziehende richtige Phasenlage detektiert und verfolgt, ist aus Stabilitätsgründen kaum möglich, zumal praktische Ausführungen der Schaltung zwischen der Frequenz-/Phasenkorrektur des PLL-gesteuerten Oszillators mit der komplexen Mischung des Eingangssignals in das Basisband und dem Symbolentscheider Verzögerungen von mehreren Symboltakten haben. Außerdem befinden sich Regelfilter in der Schleife, was zusammen erhebliche Signalverzögerungen bedingt, die bei hoher Schleifenverstärkung zu Instabilitäten führen.

Die Aufgabe der Erfindung besteht darin, ein verbessertes Verfahren und eine Schaltungsanordnung zum Erzeugen eines Symbols beim Empfang eines modulierten Signals, insbesondere zum Erzeugen von Regelsignalen, bereitzustellen. Insbesondere soll mit der Schaltungsanordnung eine Empfangsschaltung ermöglicht werden, die auch bei großem Offset von Trägerfrequenz oder Trägerphase schnell einrastet, ohne dass dabei die Gesamtstabilität des Systems beeinflusst wird.

Diese Aufgabe wird durch das Verfahren zum Synchronisieren einer Schaltungsanordnung beim Empfang eines in den mehrdimensionalen komplexen Signalraum gemischten, modulierten Signals mit den Merkmalen des Patentanspruchs 1 gelöst. Eine Schaltungsanordnung zum Durchführen eines solchen Verfahrens ist Gegenstand des Patentanspruchs 15.

Vorteilhafte Ausgestaltungen sind Gegenstand abhängiger Ansprüche.

Ausgegangen wird von einem Verfahren zum Synchronisieren einer Schaltungsanordnung beim Empfang eines modulierten Signals, das in den mehrdimensionalen komplexen Signalraum gemischt ist bzw. wird, bei dem die Entscheidung mit einem Entscheider durch Analyse eines Empfangssignals im komplexen Koordinatenraum unter Verwendung von Regelungsparametern getroffen wird und abhängig von zumindest einem entschiedenen Symbol die Regelungsparameter für spätere Entscheidungen angepasst werden. Die Demodulation findet dabei vorzugsweise im zweidimensionalen komplexen Phasenraum, d.h. im Basisband mit den komplexen I- und Q-Komponenten statt. Einsetzbar ist das Verfahren auch für ein eindimensionales Signal, z.B. ein BPSK-Signal mit Punkten auf der reellen Achse, wenn zur Verarbeitung eine Einmischung bzw. Transformierung in den mehrdimensionalen komplexen Signal- bzw. Phasenraum durchgeführt wird.

Die besonders bevorzugte vorteilhafte Lösung besteht darin, dass dem Entscheider eine eigene Rotationseinrichtung zugeordnet ist, die eine momentane Rotation mit einem vorläufigen, insbesondere geschätzten Korrekturwinkel vor der Entscheidung ohne Rücksichtnahme auf die Regelung des lokalen Oszillators vornehmen kann. Der geschätzte Korrekturwinkel wird dabei durch eine mit dem Entscheider verkoppelte Auswertungseinrichtung gebildet. Analog hierzu ist ein Verfahren, bei dem statt des Signals Sollsymbole rotiert werden oder eine Kombination aus beiden Rotationen vorgenommen wird. Der vorläufige bzw. geschätzte Rotationswinkel wird durch nachfolgende Symbolentscheidungen geprüft und durch Integration des genannten Phasenfehlers iterativ verbessert, bis die tatsächliche Rotation des empfangenen Signals gegenüber dem Bezugskoordinatensystem erkannt ist. Im Falle eines Frequenzoffsets folgt der Rotationswinkel dem zunehmenden Phasenfehler. Die Regelung dieser Rotation, die von dem bei der Entscheidung detektierten Phasenfehler abhängt, kann eine sehr hohe Schleifenverstärkung haben, um das sichere Einrasten in die Phasenlage des empfangenen Signals zu gewährleisten. Da die hohe Regelverstärkung auf diesen Schaltungsteil begrenzt ist, ist die Stabilität der eigentlichen Trägerregelung, die eine sehr viel geringere Schleifenverstärkung haben kann, nicht beeinflusst. Als Eingangssignal für die eigentliche Trägerregelung eignet sich der geschätzte Rotationswinkel oder eine daraus abgeleitete Größe. Außerdem kann das entschiedene Symbol vorteilhafterweise den Regelungen von Verstärkung, Abtastzeitpunkt und Entzerrer zugeführt werden. Wurde das empfangene Signal vor der Entscheidung rotiert, muss das entschiedene Symbol vor der Verwendung in diesen Regelungen um den entsprechenden Winkel zurückrotiert werden. Dadurch ist es möglich, mit diesem Symbol, nachfolgend meist Regelungssymbol genannt, Korrekturparameter für die genannten Regelungen zu bestimmen, um ein schnellstmögliches Synchronisieren der Schaltungsanordnung zu ermöglichen. Für die Verstärkungsregelung eignet sich außerdem die Differenz der Radien des empfangenen Signals und des entschiedenen Symbols. Die Ausgangsdaten für weitere Verarbeitungsschritte können entweder auch diesem Entscheider entnommen werden oder aus einem separaten Datenentscheider stammen, dessen Eingangsdaten oder dessen Sollsymbole diese zusätzliche Rotation um den Schätzwert nicht erfahren.

Die Rotationseinrichtung und/oder die Auswerteeinrichtung weisen entsprechend vorzugsweise einen eigenen Entscheider auf, der nachfolgend auch als weiterer Entscheider oder Hilfsentscheider bezeichnet wird. Dieser weitere Entscheider hat vorzugsweise die Funktion eines für sich bekannten Entscheiders, wobei ihm optional ein modifiziertes Signal zugeführt wird.

Die Verkippung erfolgt bei einem ersten Schritt mangels einer plausiblen Schätzung z.B. um einen Winkel von weniger als 360°, vorzugsweise bei Modulobetrachtung der Quadranten weniger als 90°.

Vorteilhafterweise kann durch einen Abgriff der Signalkomponenten, insbesondere Phasensignalkomponenten, vor und hinter dem Entscheider eine Differenz bestimmt werden, welche einen Abweichungswert angibt, der mit dem zuvor bestimmten Kippwinkel verglichen werden kann. Eine Filtereinrichtung führt eine Plausibilitätskontrolle durch, wobei diverse Regelungsparameter verwendet werden können, um einen je nach Bedarf mehr oder weniger breiten Toleranzbereich vorzugeben, innerhalb dessen eine ausreichende Signalqualität erkannt wird, um ein Einrasten der Schaltungsanordnung zu ermöglichen.

Vorteilhafterweise kann der Entscheider sowohl im Bereich des polaren Koordinatenraums als auch im Bereich des kartesischen Koordinatenraums betrieben werden.

Vorteilhafterweise weist eine Regeleinrichtung für Trägerfrequenz und -phase einen direkten Zweig zum Ausregeln einer Phasenabweichung und einen Integrator zum Ausregeln einer Frequenzabweichung auf, wobei für eine Frequenzregelung der Integrator von der zeitlichen Ableitung des vorläufigen bzw. geschätzten Rotationswinkels oder eines daraus gebildeten Signals gespeist wird. Für eine Phasenregelung werden ein direkter Zweig und der Integrator von dem geschätzten Rotationswinkel oder einem daraus gebildeten Signal gespeist.

Es wurde somit ein Verfahren entwickelt, bei dem im Entscheider selbst die augenblickliche Verdrehung des empfangenen Koordinatensystems gegenüber dem Koordinatensystem der Schaltungsanordnung geschätzt und von Symbol zu Symbol weiterverfolgt wird. Die Scheifenverstärkung der Hauptregelung kann dabei sehr klein bleiben. Gelegentliche Fehlentscheidungen mit Annahme falscher Kippwinkel des Empfangssignals haben praktisch keinen Einfluss auf die eigentliche Frequenz- oder Phasenregelung, da die wirkliche Phasenlage immer wieder schnell erkannt und eingefangen wird.

Eine Anwendung des Verfahrens bzw. einer entsprechenden Schaltungsanordnung bietet sich insbesondere bei binären oder komplexen digitalen Modulationsverfahren wie PSK (Phase Shift Keying) und QAM an. Derartige Modulationsverfahren werden von den neueren Rundfunk-, Fernseh- und Datendiensten über Kabel, Satellit und teilweise terrestrisch benutzt.

Ein Ausführungsbeispiel der Erfindung und verschiedene Ausführungsformen dazu werden nachstehend anhand der Zeichnung näher erläutert. Es zeigen:
- Fig. 1: eine grundlegende Schaltungsanordnung für einen Decoder zum Entscheiden eines Symbols;
- Fig. 2A-2C: schematisch die Lage eines in einem verkippten bzw. rotierten Empfangs-Koordinatensystem empfangenen Signals und ein Grundprinzip zur Anpassung an das Koordinatensystem der Schaltungsanordnung durch Drehung eines Empfangssignals und entgegengesetzter Drehung eines entschiedenen Hilfssymbols;
- Fig. 3A-3B: schematisch die Lage eines in einem rotierten Empfangs-Koordinatensystem empfangenen Signals und die Anpassung eines Entscheidungsgitters der Schaltung durch Rotation;
- Fig. 4: einen Schaltungsausschnitt zur Darstellung einer Ausführungsform eines Entscheiders, bei der die Symbole und Entscheidungsgrenzen gedreht werden;
- Fig. 5: eine allgemeine Ausführungsform des Entscheiders, bei der Signale und Symbole rotiert werden;
- Fig. 6: Details einer die Verfahrensabläufe steuernden Rotationssteuer-Einrichtung, welche insbesondere die Generierung eines Rotationssteuersignals und eines Amplitudenfehlersignals beeinflusst;
- Fig. 7: eine weitere Ausführungsform zur Anwendung des Entscheiders, bei welcher Rotation und Gegenrotation sowie auch die Entscheidung eines Symbols im polaren Koordinatenraum erfolgen;
- Fig. 8: eine Ausführungsform einer Trägerfrequenz- und Phasenregeleinrichtung;
- Fig. 9A, 9B: ein Beispiel für einen gemessenen Phasenfehler bei 64-QAM eines Verfahrens gemäß dem Stand der Technik (9A) und die Ableitung dieses Signals, d. h. die Bestimmung eines Frequenzoffsets, (Fig. 9B) sowie
- Fig. 10A - 10C: im Vergleich dazu ein Beispiel für den gemessenen Phasenfehler bei 64-QAM beim beschriebenen Verfahren (Fig. 10A) und die Ableitung dieses Signals, d. h. eine Bestimmung des Frequenzoffsets, für eine offene (Fig. 10B) bzw. eine geschlossene (10C) Regelschleife;
- Fig. 11: gemittelte Regelspannungen über eine Winkelabweichung von -45° bis +45°gemäß dem Stand der Technik bei einer Modulation gemäß 256-QAM und
- Fig. 12: ein Diagramm wie in Fig. 13 mit anderem Maßstab und Darstellung der idealen, theoretischen Regelspannungsfunktion.

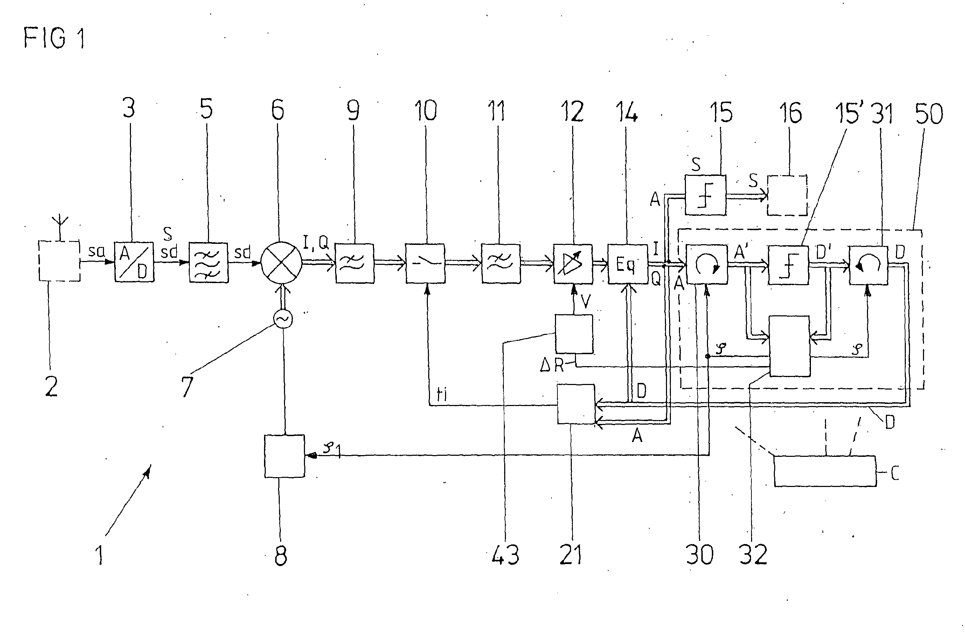

Wie dies aus Fig. 1 ersichtlich ist, besteht ein Demodulator 1 als beispielhafte Schaltungsanordnung zum Bestimmen und Entscheiden von Symbolen S, aus einem digitalisierten Signal sd, welches an ein Quadratursignalpaar eines Modulationsverfahrens, z. B. gemäß einem QAM-Standard, gekoppelt ist, aus einer Vielzahl von Einzelkomponenten. Diese können alle oder einzeln auch Bestandteil einer integrierten Schaltung sein. Insbesondere sind nachfolgend beschriebene Komponenten je nach Anwendungszweck weglassbar oder um weitere Komponenten ergänzbar. Auch ist die Weiterführung von Signalen als reelle Signale, komplexe Signale oder einzelne komplexe Signalkomponenten je nach Anwendungszweck und spezieller Schaltungsanordnung entsprechend anpassbar.

Bei der dargestellten Ausführungsform empfängt der Demodulator 1 an einem Eingang von einer Signalquelle 2, beispielsweise einem Tuner, ein analoges Signal sa. Dieses analoge Signal sa, welches üblicherweise in einer bandbegrenzten Zwischenfrequenzlage vorliegt, wird einem AD-Umsetzer 3 (AD: Analog/Digital) zum Umsetzen in ein digitales Signal sd zugeführt. Das digitale Signal sd wird vom AD-Umsetzer 3 zu einem Bandpass-Filter 5 geführt, welches das digitale Signal von Gleichanteilen und störenden Oberwellen befreit.

Das vom Bandpass-Filter 5 ausgegebene Signal wird einem Quadraturumsetzer 6 zugeführt, welcher das digitale bzw. digitalisierte Signal sd in das Basisband umsetzt. Das Basisband entspricht den Anforderungen des Demodulators 1 und des verwendeten Modulationsverfahrens. Entsprechend gibt der Quadraturumsetzer das in die beiden Quadratursignalkomponenten I, Q des kartesischen Koordinatensystems aufgesplittete digitalisierte Signal sd aus. Zur Frequenzumsetzung wird der Quadraturumsetzer 6 üblicherweise mit zwei um 90° versetzten Trägern aus einem lokalen Oszillator 7 gespeist, dessen Frequenz und Phase durch eine Trägerregeleinrichtung 8 gesteuert wird.

Die Quadratursignalkomponenten I, Q, die von dem Quadraturumsetzer 6 ausgegeben werden, werden einer Schaltung zur Abtastratenwandlung zugeführt, die aus einem Tiefpass-Filter 9 und einer Symbol-Abtasteinrichtung 10 besteht. Die Steuerung der Symbol-Abtasteinrichtung 10 erfolgt über einen Eingang, dem ein Abtastsignal tᵢ von einer Taktsteuereinrichtung 21 zugeführt wird. Die Symbol-Abtastzeitpunkte des Abtastsignals tᵢ orientieren sich im normalen Betriebszustand an der Symbolrate 1/T des verwendeten Modulationsverfahrens oder einem ganzzahligen Vielfachen davon und an der genauen Phasenlage der empfangenen digitalen Symbole. Das Ausgangssignal der Abtasteinrichtung 10 wird mittels eines Tiefpass-Filters 11 mit einer Nyquist-Charakteristik gefiltert und einer Verstärkungsregeleinrichtung 12 zugeführt. Die Verstärkungsregeleinrichtung 12 dient dazu, den Aussteuerbereich eines Daten- bzw. Symbolentscheiders 15 optimal abzudecken. Das Ausgangssignal der Verstärkungsregeleinrichtung 12 wird einem Entzerrer (Equalizer) 14 zugeführt. Der Entzerrer 14 befreit die beiden Komponenten des Quadratursignalpaars I, Q von störenden Verzerrungen und stellt ein korrigiertes Signal I, Q bzw. A an seinem Ausgang bereit.

Das nach dem Entzerrer 14 bereitstehende komplexe Empfangssignal A wird somit wie üblich einem Datenentscheider 15 zugeführt, der die digitalen Daten S extrahiert. Diese Symbole S werden dann weiteren digitalen Signalverarbeitungseinrichtungen 16 zugeführt.
Dieser Entscheider 15 ist jedoch nicht in die entscheidungsrückgekoppelten Regelungen (decision feedback controls) von Trägerfrequenz/-phase (carrier/phase recovery), Abtastzeitpunkt (timing recovery, clock recovery), Verstärkungsregelung oder Entzerrer (equalizer) eingebunden. Diese Regelungszweige werden vielmehr von einer besonderen Hilfsschaltung 50 mit einem weiteren Entscheider, zur Unterscheidung auch als Regelungs-Entscheider 15' bezeichnet, der ein modifiziertes Eingangssignal A' zugeführt bekommt, gesteuert.

Das vom Entzerrer 14 ausgegebene Signal A wird dazu einer Anordnung von Bauelementen 30 - 32 zum Bestimmen von Regelungsparametern (D, D', ΔR, ρ) zugeführt, die ganz oder teilweise auch integral in einem einzigen Halbleiterbaustein in Hard-, Software- oder in gemischter Form ausgeführt sein können. Diese Regelungsparameter werden dann den entscheidungsrückgekoppelten Regelkreisen bzw. Komponenten im Demodulator 1 direkt oder indirekt zugeführt. Derart mit Hilfssymbolen D' des Entscheiders 15' oder den Regelungssymbolen D bzw. den Symbolkomponenten R, α oder anderen daraus erzeugten Signalen ΔR, ρ werden insbesondere der Entzerrer 14, die Verstärkungsregeleinrichtung 12, die Trägerregeleinrichtung 8 und eine Steuereinrichtung versorgt, insbesondere eine Taktsteuereinrichtung 21 für die Symbol-Abtasteinrichtung 10 versorgt.

Diese Regelkreise werden dabei je nach Schaltungsanordnung mit beiden Quadratursignalkomponenten des Symbols D oder D' und des Signals A oder A' in kartesischen Koordinaten I, Q oder in polaren Koordinaten R, α versorgt. Möglich ist je nach Schaltungsanordnung auch die Versorgung einzelner der Bauelemente mit nur einer der Quadratursignalkomponenten oder daraus abgeleiteten Größen, beispielsweise der Trägerregeleinrichtung 8 mit einer aus dem Winkel α des vorläufigen Symbols A und dem Winkel des Regelungssymbols D abgeleiteten Wert ρ und der Verstärkungsregelungseinrichtung 12 mit der Differenz ΔR der Radien des Signals A, A' und des Symbols D, D'.

In Figur 1 besteht eine besondere Schaltung 50 zum Bestimmen der Regelungsparameter aus einer Rotationseinrichtung 30, einem Regelungsentscheider 15', einer weiteren Rotationseinrichtung 31 und einer Rotationssteuereinrichtung 32.

Die Rotationseinrichtung 30 rotiert das vom Entzerrer 14 ausgegebene Signal A um einen bestimmten Betrag ρ und leitet das entstehende komplexe Signal A' an den Regelungs-Entscheider 15' weiter, der ein Hilfssymbol D' erzeugt. Um die Rotation vorzunehmen, wird der Rotationseinrichtung 30 dazu ein Rotationssteuersignal ρ zugeführt. Das Rotationssteuersignal ρ entspricht einem geschätzten momentanen Rotations- bzw. Kippwinkel ρ zwischen dem Koordinatensystem des empfangenen Signals sa, sd und dem Koordinatensystem der Schaltungsanordnung 1. Das Rotationssteuersignal ρ wird dazu in einer Rotationssteuereinrichtung 32 bestimmt, welcher das Ausgangssignal A' der Rotationseinrichtung 30 und das Ausgangssignal D' des Regelungs-Entscheiders 15' zugeführt werden.

Das Ausgangssignal D' des Regelungs-Entscheiders 15' wird außerdem der Gegenrotationseinrichtung 31 zum Durchführen einer entgegengesetzten Rotation zugeführt. Der Gegenrotationseinrichtung 31 wird das Rotationssteuersignal ρ der Rotationssteuerungseinrichtung 32 zugeführt, um das im System der Schaltungsanordnung entschiedene Hilfssymbol D' wieder in das Koordinatensystem des empfangenen Signals zurückzudrehen. Das Ausgangssignal D der Gegenrotationseinrichtung 31 wird für die Regelkreise verwendet und z. B. der Taktsteuereinrichtung 21 und dem Entzerrer 14 zugeführt. Die beiden Rotationseinrichtungen 30, 31 erzeugen unitäre Rotationen und werden z. B. durch für sich bekannte komplexe Multiplikationen mit Kosinus und Sinus gebildet.

Das Rotationssteuersignal ρ wird von der Rotationssteuereinrichtung 32 in geeigneter Weise aus den Winkeln der Signalfolge A' und den Winkeln der Hilfssymbole D' erzeugt.

Die Taktsteuereinrichtung 21 gibt das Abtastsignal tᵢ aus, welches auf der Symbolrate 1/T des verwendeten Modulationsverfahrens oder einem Vielfachen davon beruht.

Zur Steuerung der Taktsteuereinrichtung 21, der Trägerregeleinrichtung 8, des Entzerrers 14, der Rotationssteuereinrichtung 32 und der Steuereinrichtung 43 für die Verstärkungsregeleinrichtung 12 und weiterer Komponenten des Demodulators 1 stehen diese mit einer Steuereinrichtung C in Verbindung. Die Steuereinrichtung C bewirkt einen ordnungsgemäßen Ablauf und steuert die einzelnen Komponenten und Abläufe entsprechend Hard- oder Software-gestützten Anweisungen. Vorzugsweise kann die Steuereinrichtung auch Funktionen einzelner der genannten Komponenten ganz oder teilweise in sich integriert aufweisen.

Ziel der Schaltungsanordnung ist insbesondere die Erzeugung einer Regelspannung bzw. Regelspannungsfunktion bei Modulo-90°-Betrachtung, wie dies aus Fig. 12 ersichtlich ist.

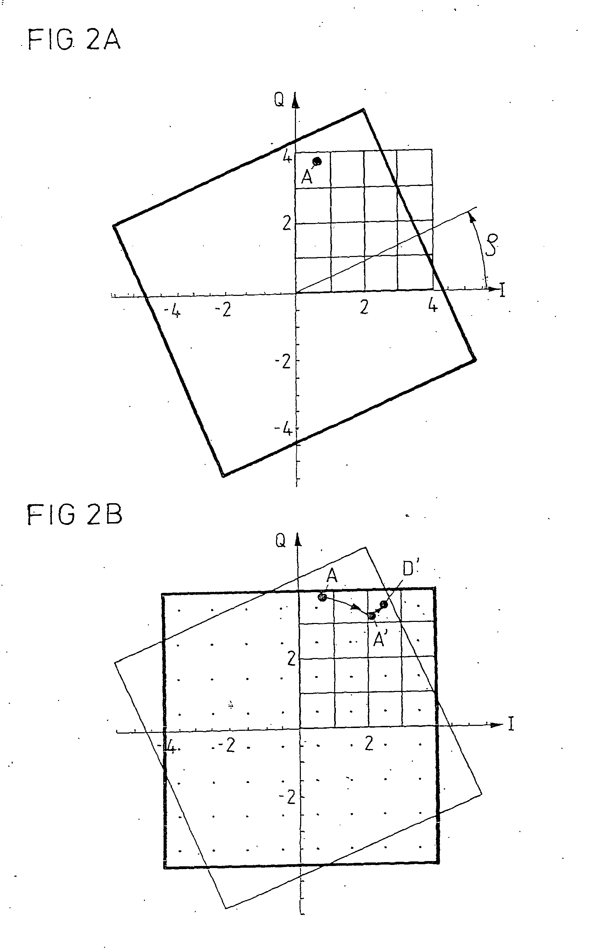

Es wird angenommen, dass zu einem ersten Zeitpunkt t1, bei dem Phase und Frequenz des Empfängers noch nicht eingerastet sind, das Koordinatensystem des Eingangssignals A noch um den Winkel ρ gegenüber dem Bezugskoordinatensystem gekippt ist und gegebenenfalls sogar wegen eines Frequenzoffsets rotiert, wie dies in Fig. 2A dargestellt ist. Ein empfangenes Signal wird entsprechend nicht sofort in dem angedeutetem Raster der Schaltungsanordnung 1 entschieden, da eine Verdrehung des empfangenen Koordinatensystems um den Winkel ρ angenommen wird.

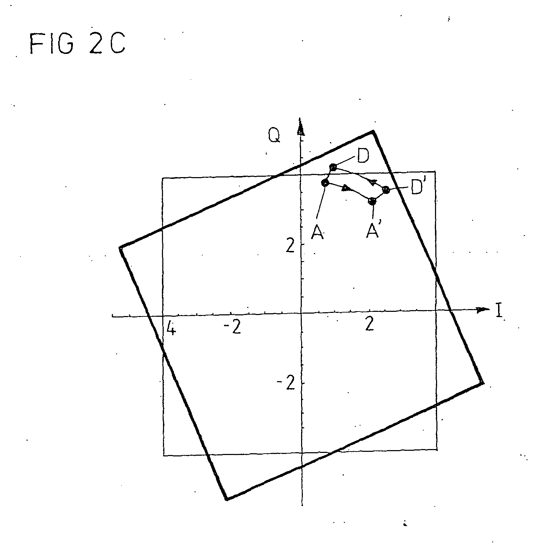

Das vom Entzerrer 14 ausgegebene Eingangssignal A wird nun in der Rotationseinrichtung 30 um diesen Kippwinkel ρ in das Schaltungsanordnungssystem gedreht, so dass in erster Näherung kein Phasenfehler mehr vorhanden ist. Nach einer in Fig. 2B dargestellten Rotation in das Schaltungsanordnungssystem wird dieses rotierte Signal A' dann dem Hilfs-Entscheider 15' zugeführt, der eine Entscheidung im feststehenden Schaltungsanordnungssystem vornimmt. Dabei wird das rotierte Eingangssignal A' in für sich genommen üblicher Art und Weise einem Sollsymbol zugeordnet. Die Gegenrotationseinrichtung 31 rotiert das entschiedene Symbol D' um den Winkel ρ in entgegengesetzter Richtung aus dem Koordinatensystem der Schaltungsanordnung 1 in das vermutete Koordinatensystem des Empfangssignals zurück. Nach dieser entgegengesetzten Rotation steht dem Eingangssignal A ein entschiedenes Regelungssymbol D gegenüber, obwohl die eigentliche Trägerregeleinrichtung, bestehend insbesondere aus der Trägerregeleinrichtung 8, dem lokalen Oszillator 7 und dem Quadraturumsetzer 6, noch nicht eingerastet ist. Ein Sollpunkt und eine komplexe Fehlerspannung stehen somit zur Verfügung, wie dies in Fig. 2C dargestellt ist.

Das Eingangssignal A in die Schaltungsanordnung 50 und das darin erzeugte Regelungssymbol D können für die entscheidungsrückgekoppelten Regelungen der Abtastzeitpunktgewinnung und des Entzerrers 14 verwendet werden. Der aus dem Eingangssignal A und dem Symbol D bzw. A' und D' bestimmte vermutliche Rotationswinkel ρ des Eingangssignals A kann für die entscheidungsrückgekoppelte Trägerregelung in der Trägerregeleinrichtung 8 verwendet werden und eine ebenfalls in der Schaltungsanordnung 32 aus dem Eingangssignal A und dem Symbol D bzw. A' und D' abgeleitete Amplitudenabweichung ΔR, die durch Subtraktion des Radius des Hilfssymbols D, D' von dem Radius des Eingangssignals A, A' gewonnen wird, kann für die entscheidungsrückgekoppelte Amplitudenregelung in der Amplitudensteuereinrichtung 43 verwendet werden.

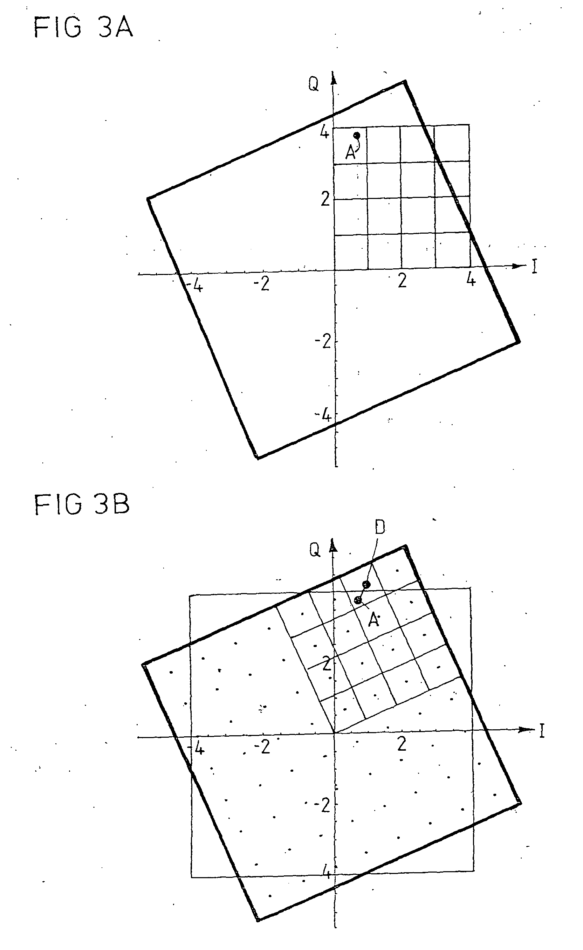

Alternativ zur Rotation der Koordinaten des Empfangssignals in das System der Schaltungsanordnung und der Rückrotation des entschiedenen Symbols in das Koordinatensystem des Empfangssignals als Regelungssymbol für die entscheidungsrückgekoppelten Regelungen kann auch, wie dies aus Fig. 3B ersichtlich ist, das Entscheidungsgitter gegenüber dem ursprünglichen (Fig. 3A) so gedreht werden, dass sein Koordinatensystem mit dem geschätzten Koordinatensystem des Empfangssignals A übereinstimmt.

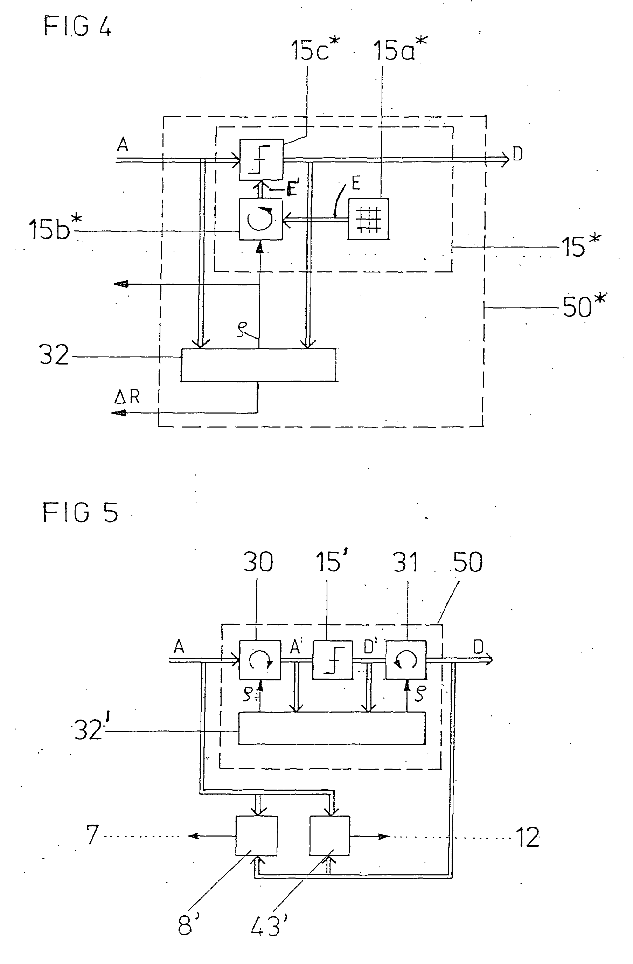

Fig. 4 stellt einen Ausschnitt einer derartigen Schaltungsanordnung 1 dar, wobei die besondere Schaltung 50* dem in Fig. 1 dargestellten Block 50 mit den Rotations-, Entscheider- und Steuerkomponenten entspricht. Bezüglich weiterer Komponenten wird daher auf Fig. 1 und die zugehörige Beschreibung verwiesen. Die dargestellte Schaltung 50* verwendet zum Durchführen des vorstehend beschriebenen Verfahrens Entscheidungsgrenzen E, welche beispielsweise aus einer Tabelle in einem Speicher 15a* bereitgestellt werden. In einer Recheneinrichtung 15b* als Rotationseinrichtung werden die Entscheidungsgrenzen E' so rotiert, dass die geschätzte Rotation des Empfangssignals sa, sd, A gegenüber dem Koordinatensystem der Schaltungsanordnung erreicht wird. Diese derart rotierten Entscheidungsgrenzen E' werden dem Entscheider 15c* zugeführt. Die Entscheidung findet dann ohne vorherige Rotation des Empfangssignals und nachfolgende entgegengesetzte Rotation des dabei erzeugten Symbols unmittelbar im geschätzten Koordinatensystem des Empfangssignals A statt.

Bei diesem wie auch weiteren Ausführungsbeispielen werden bereits beschriebene Verfahrensschritte und Bauelemente unter Bezug auf vorstehende Beschreibungen für gleiche oder gleichwirkende Verfahrensschritte und Bauelemente nicht wiederholt genannt.

Insbesondere sind beide Verfahren, Rotation des Empfangssignals und Gegen- bzw. Rückrotation des entschiedenen Symbols oder aber die Rotation der Entscheidungsgrenzen, äquivalent und austauschbar. Je nach technischen Möglichkeiten der Implementierung wird eines dieser beiden Verfahren besonders bevorzugt umsetzbar sein. Nachfolgend werden weitere Details insbesondere des ersten Ausführungsbeispiels beschrieben, wobei äquivalente Umsetzungen auch für das zweite Ausführungsbeispiel möglich sind.

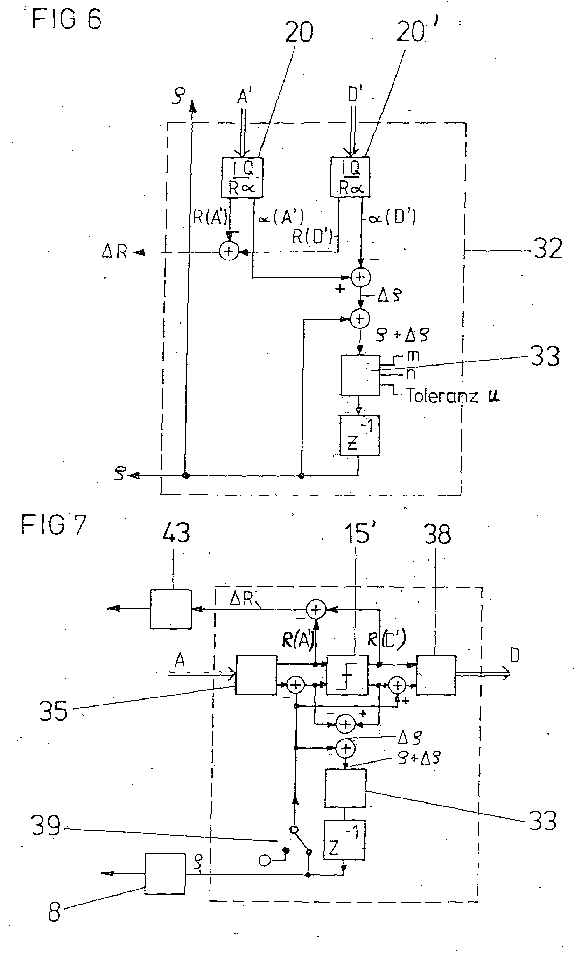

In Fig. 5 ist eine allgemeinere Ausführungsform des Schaltungsblocks der Schaltung 50 dargestellt. Bei diesem Block wird somit das vorläufige Symbol A der Rotationseinrichtung 30 zugeführt, welche nach der Rotation ein rotiertes Symbol A' ausgibt. Dieses wird sowohl dem Entscheider 15' als auch der Rotationssteuereinrichtung 32' zugeführt. Das aus dem Regelungsentscheider 15' ausgegebene entschiedene Hilfssymbol D' wird sowohl der Gegenrotationseinrichtung 31 als auch der Rotationssteuereinrichtung 32' zugeführt. Die Rotationssteuereinrichtung 32' erzeugt ein Steuersignal ρ für die Rotationseinrichtung 30 und die Gegenrotationseinrichtung 31, welches diesen zugeführt wird. Das ursprüngliche Symbol A des Entzerrers 14 wird außerdem direkt der Trägerregeleinrichtung 8' und der Amplitudenregeleinrichtung 43' zugeführt. Diese bekommen außerdem das Regelsymbol D, welches von der Gegenrotationseinrichtung 31 ausgegeben wird, zugeführt. Dieses Regelsymbol D wird zweckmäßigerweise auch der Taktsteuereinrichtung 21 und dem Entzerrer 14 zugeführt. Die Taktsteuereinrichtung 21 bekommt außerdem das vom Entzerrer 14 ausgegebene Symbol A zugeführt.

Eine beispielhafte Rotationssteuereinrichtung 32 ist in Fig. 6 dargestellt. Der Rotationssteuereinrichtung 32 werden als Eingangssignal das rotierte Symbol A' und das vom Entscheider 15' ausgegebene entschiedene Hilfssymbol D' zugeführt. Diese beiden Signale bzw. Symbole A', D' werden jeweils einem Koordinatenumsetzer 20 bzw. 20' zugeführt, welche diese in polare Koordinaten umsetzen. Beispielsweise handelt es sich dabei jeweils um eine für sich bekannte Cordic-Schaltung. Von diesen werden jeweils eine Radiuskomponente R und eine Winkelkomponente bzw. Phase α ausgegeben. Alternative Verfahren zur Koordinatenumsetzung sind anwendbar, insbesondere mathematische Näherungsverfahren oder auch der Einsatz von Tabellen. Bestimmt wird durch Subtraktion der Radiuskomponenten R(A'),R(D') die Amplitudendifferenz ΔR, welche als Steuersignal für die Amplitudenregeleinrichtung 43 ausgegeben wird. Die Phasen- oder Winkeldifferenz Δρ wird durch eine entsprechende Subtraktion der Phase des vom Entscheider 15' ausgegebenen Symbols D' von der Phase des eingegebenen Signals A' bestimmt und stellt den Phasenschätzfehler dar. Diese Phasendifferenz Δρ wird einer Schaltungsanordnung aus einem Addierer, einer Filtereinrichtung 33 und einem Verzögerungsglied (z⁻¹) zugeführt, wobei das Ausgangssignal ρ dieser Anordnungsabfolge auch zum zweiten Eingang des Addierers zurückgeführt wird. Die dadurch gebildete Summe aus dem Phasenanteil ρ und der Phasendifferenz Δρ stellt den gefundenen wahrscheinlichsten aktuellen Koordinaten-Rotationswinkel ρ + Δρ des in den Entscheider 15' eingegebenen Signals gegenüber dem System der Schaltungsanordnung dar. Diese Summe ρ+Δρ wird in dem Filter 33 auf Plausibilität überprüft. Der Ausgang des Filters 33 stellt zugleich den Rotationswinkel ρ für die nächste vorzunehmende Entscheidung zur Verfügung. Der Rotationswinkel ρ wird insbesondere der Rotationseinrichtung 30, der Gegenrotationseinrichtung 31 und der Trägerregeleinrichtung 8 zugeführt.

Die vorstehend beschriebenen Ausführungsformen stellen Beispiele für einen bevorzugten QAM-Empfänger bzw. Decoder mit einer Entscheidungsfällung der Regelungs- bzw. Hilfsentscheidung im kartesischen Koordinatenraum I/Q dar.

Fig. 7 stellt eine Ausführungsform dar, bei welcher die Entscheidung im Entscheider 15' im polaren Koordinatensystem durchgeführt wird. Rotation und Gegenrotation finden durch vorherige Umwandlung des Signals in polare Koordinaten und einfache Subtraktion bzw. Addition des Rotationssteuersignals bzw. Verkippungswinkels von der oder zur Phasenkomponente. statt. Außerdem findet die Entscheidung ebenfalls im polaren Koordinatensystem statt.

Vorteilhafterweise weist diese Ausführungsform auch einen fakultativen Schalter 39 auf, mit dem nach einer erfolgten Synchronisation des Trägerregelkreises die Integration der Phasendifferenz aufgehoben werden kann.

Zur Erzeugung des nächsten Rotationssteuersignals ρ werden die Phasen des Eingangs- und des Ausgangssignals A' bzw. D' vor bzw. hinter dem Entscheider 15' abgegriffen und einem Subtraktionsglied zugeführt. Dieses bestimmt die Phasendifferenz Δρ, welche einem weiteren Additionsglied zugeführt wird. Dieses Additionsglied addiert die Phasendifferenz und das aktuelle Rotationssteuersignal p. Die Summe wird dann einer Filtereinrichtung 33 zugeführt.

Der Schalter 39 ist dabei in dem Rückführungszweig von vorgeschaltetem Addierer, Filtereinrichtung 33 und Verzögerungsglied (z⁻¹) geschaltet. In der nicht leitenden Stellung des Schalters 39 wird der bestimmte Rotationswinkel ρ als das Rotationssteuersignal nur der Trägerregeleinrichtung 8 zugeführt.

Der Filtereinrichtung 33 werden als weitere Parameterwerte m, n und ein Toleranzwert u zugeführt. Diese können beispielsweise aus einer Speichereinrichtung oder von einer externen zentralen Steuereinrichtung zugeführt werden.

Nach dem Verzögerungsglied z⁻¹ steht das Ausgangssignal des Filters 33 als neues Rotationssteuersignal ρ für die nächste Entscheidung zum nächsten Zeitpunkt zur Verfügung. Die Filtereinrichtung in dieser Rotationskontrolle überprüft den gefundenen derzeitigen Rotationswinkel ρ + Δρ auf Plausibilität und passt das Rotationssteuersignal ρ für den nächsten Zeitpunkt an.

Die Filtereinrichtung 33 gibt zu Beginn einen beliebigen Wert für das Rotationssteuersignal ρ aus. Ein dann festgestellter Offset Δρ ist auf eine noch ungenügende Schätzung des Rotationssteuersignals ρ zurückzuführen. Bei vornherein sehr ungenügender Schätzung des Rotationssteuersignals ρ werden viele Entscheidungen durch eine falsche Symbolzuordnung im Entscheider 15' inkorrekt sein. Allerdings gibt es Winkeloffsets, bei denen die meisten Entscheidungen oder sogar alle korrekt sind, d. h., das Rotationssteuersignal ρ wurde richtig geschätzt und die Winkeldifferenz Δρ ist ungefähr 0°. Rotiert das Eingangssignal A bedingt durch einen Frequenzoffset, was im Fall der noch nicht eingerasteten Träger-Regelschleife anzunehmen ist, so wird das System früher oder später einen solchen "guten" Winkeloffsetbereich durchfahren. Alle oder viele der aufeinanderfolgenden gefundenen Rotationswinkel ρ+Δρ werden gleiche oder ähnliche Werte aufweisen. Die Filtereinrichtung 33 erkennt nun, dass mindestens m von n, z. B. 4 von 8, der letzten gefundenen Rotationswinkel ρ+Δρ dem jetzigen Rotationssteuersignal ρ bis auf eine Toleranz u, z. B. 0,1 rad, entsprechen und hält den jetzigen gefundenen Rotationswinkel ρ+Δρ für plausibel, um ihn als nächsten Wert für das Rotationssteuersignal ρ zu verwenden. Die Parameter n, m, u können vorteilhafterweise den Empfangsbedingungen oder dem Fortschritt der Synchronisation angepasst werden.

Die einfachste Ausführung der Filtereinrichtung 33 ist eine Identitätsstufe, die einem Kurzschluss zwischen Eingang und Ausgang entspricht. Das nächste Rotationssteuersignal ρ ist dann der aktuell gefundene Rotationswinkel ρ+Δρ.

Ist die eigentliche Phasenregelung eingerastet, kann sich das Rotationssteuersignal ρ auf die gefundene Winkelabweichung Δρ beschränken, indem mit dem in Fig. 7 dargestellten Schalter 39 die Winkelintegration unterbunden wird.

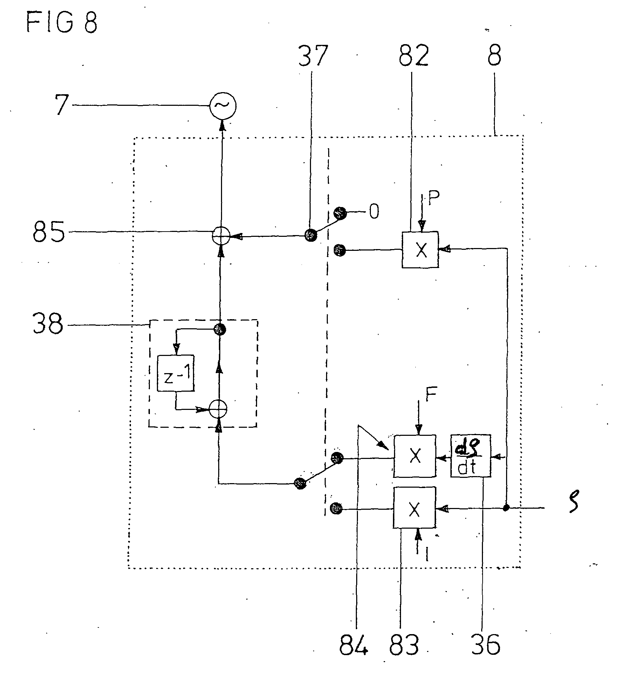

Fig. 8 stellt Details einer Trägerregeleinrichtung 8.dar. Die Trägerfrequenz- und Trägerphasen-Regelungseinrichtung 8 besteht vorzugsweise aus einem Differentiator 36, drei Multiplikationsgliedern 82, 83, 84 einem zweipoligen Umschalter 37, einem Integrationsglied 38 und einem Addierer 85.

Den beiden ersten Multiplikationsgliedern 82, 83 wird der Verkippungswinkel bzw. das Rotationssteuersignal ρ als erste Größe und als zweite Größe ein P-Koeffizient bzw. ein I-Koeffizient zugeführt. Außerdem wird das Rotationssteuer-Signal ρ einem Differentiator 36 (dρ/dt) zugeführt, dessen Ausgangssignal dem weiteren, dritten Multiplikationsglied 84 zugeführt wird. Diesem wird als zweites Signal ein F-Koeffizient zur Frequenzregelung zugeführt. Ein zweipoliger Schalter 37 schaltet einerseits den Ausgang des I-Multiplizierers 83 oder den Ausgang des F-Multiplizierers 84 auf den Integrator 38, dessen Ausgangssignal dem Addierer 85 zugeführt wird. Andererseits schaltet der zweipolige Schalter 37 zwischen dem Ausgang des P-Multiplizierers 82 und einem unbelegten Eingang, wobei das Ausgangssignal des Schalters ebenfalls dem Addierer 85 zugeführt wird. Der Ausgang des Addierers 85 liefert ein Fehlersignal an den lokalen Oszillator 7.

Zu Beginn des Synchronisationsprozesses steht der Schalter 37 in der Stellung, in der das obere Schaltelement ein Null-Signal und das untere Schaltelement das mit dem Koeffizienten F gemischte Signal liefert. Somit wird die modulorichtig gebildete Ableitung des Rotationssteuersignals dρ/dt, welche einen möglichen Frequenzoffset Δf widerspiegelt, gewichtet mit dem F-Koeffizient im Integrator 38 akkumuliert. Hat der Oszillator 7 durch die aus dem Integrator 38 kommende Steuerspannung schließlich annähernd die Sollfrequenz erreicht, wird dρ/dt sehr klein werden. Mit dieser Bedingung, dρ/dt ≈ 0, wird durch die zentrale Steuereinrichtung C der Schaltungsanordnung 1 der Schalter 37 in die andere Schaltstellung gebracht und damit eine übliche PI-Regelung (Proportional-/Integralregelung) der Phase erreicht. Der durch die vorherige Frequenzregelung erreichte Integralanteil im Integrator 38 bleibt erhalten. Ein Hauptvorteil besteht darin, dass die Koeffizienten F, P und I in der Trägerregeleinrichtung 8 und damit die Schleifenverstärkung der Hauptregelung für Trägerfrequenz und Trägerphase sehr klein sein können, da eine schnelle Phasennachführung in der Schaltung 50 erfolgt und auf die Schaltung 50 begrenzt ist.

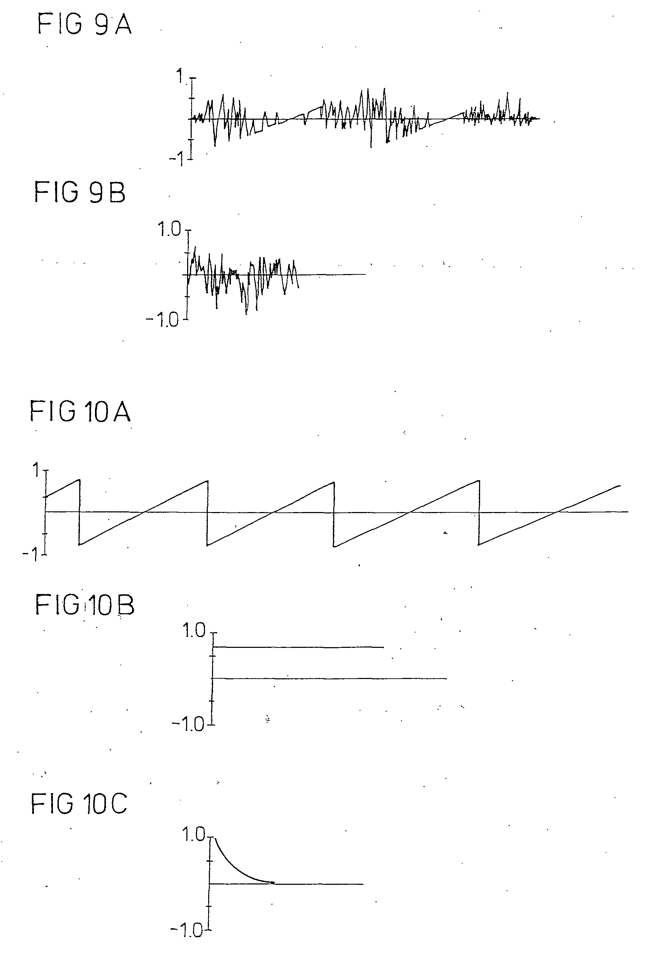

Während eine Regelspannung, wie diese in Fig. 12 skizziert ist, idealerweise von einem genormten Wert -1 bei -45° geradlinig durch den Ursprung zu einem genormten Wert von +1 bei 45° führen würde, ist dies bei tatsächlichen Phasenregelspannungen nicht der Fall. Fig. 9A zeigt eine übliche Phasenregelspannung bei 64-QAM über die Zeit. Deutlich sind Bereiche zu erkennen, in denen der Phasenoffset immer wieder durch Null geht, so dass eine Regelung einrasten könnte, wenn ihre Verstärkung groß genug sein könnte. Zu diesem Beispiel einer offenen Regelschleife zeigt Fig. 9B die durch Ableitung des Signals gewonnene Frequenzregelspannung auf einer gegenüber Fig. 9A komprimierten Zeitachse. Bei diesem Beispiel beträgt der Frequenzoffset ca. 2000 ppm der Symbolrate.

Eine entsprechende Kurve einer Phasenregelspannung mit gemessenem Rotationssteuersignal ρ bei 64-QAM nach der vorliegend vorgeschlagenen Verfahrensweise ist Gegenstand von Fig. 10A. Hervorzuheben ist nicht nur der abschnittsweise nahezu lineare Verlauf ähnlich dem aus Fig. 12 sondern auch, dass nach einzelnen auftretenden Ausreißern das Filter 33 bzw. die Schaltungsanordnung 1 in der Lage sind, die korrekte Phase sehr schnell wieder zu fangen. Der Frequenzoffset beträgt bei diesem Beispiel wiederum ca. 2000 ppm der Symbolrate, der Signal/Rauschabstand ist der gleiche wie in Fig. 9. Für dieses Beispiel mit offener Regelschleife stellt Fig. 10B den gemessenen Frequenzoffset dρ/dt für das Signal dar, jedoch auf einer komprimierten Zeitachse. Für den Fall einer geschlossenen Regelschleife zeigt Fig. 10C den entsprechenden Frequenzoffset dρ/dt. Der Maßstab ist bei den Fig. 10B und 10C dem der Fig. 9B angepasst.

Das Verfahren bzw. die Schaltungsanordnung 1 dienen vorzugsweise zum Synchronisieren eines QAM-Empfängers. In der Schaltungsanordnung 1 befindet sich eine besondere Schaltung 50, in der eine gefundene Winkeldifferenz zwischen empfangenem Signal A' und entschiedenem Symbol D' integriert und auf Plausibilität untersucht wird. Diese in einer Rotationssteuereinrichtung 32 integrierte und geprüfte Winkeldifferenz Δρ dient als Rotationssteuersignal ρ. Damit werden nachfolgend empfangene Signale A unmittelbar vor dem Entscheider 15' rotiert und dadurch korrigiert. Alternativ kann auch das Koordinatensystem des Entscheiders um den entgegengesetzten Winkel rotiert werden. Das eigentliche Regelsignal für den Lokaloszillator 7 wird aus diesem Rotationssteuersignal ρ in einer Regelschaltung 8 gebildet. Ein Einrasten der Trägerregelung ist auch bei sehr kleiner Schleifenverstärkung gewährleistet. Das entschiedene Symbol D' bzw. ggfs. zurückrotierte Symbol D oder dessen Differenz zum Eingangssignal A, A' kann weiterhin in den Regelkreisen für die Abtastrate 21, die Verstärkung 43 und dem Entzerrer 14 verwendet werden. Nachfolgende Verarbeitungsstufen enthalten entweder das so entschiedene Symbol D oder ein Symbol S aus einer weiteren Entscheiderstufe 15, die an den beschriebenen Rotationen der besonderen Schaltung 50 nicht teilnimmt.

## Patentansprüche

1. Verfahren zum Synchronisieren einer Schaltungsanordnung (1) beim Empfang eines in den mehrdimensionalen komplexen Signalraum gemischten, modulierten Signals (sa, sd), bei dem
- mit einem Entscheider (15'; 15*) durch Analyse eines Empfangssignals (sa, sd, A) im komplexen Koordinatenraum (I, Q) unter Verwendung von Regelungsparametern (ΔR, ρ, tᵢ) eine Entscheidung getroffen, insbesondere ein Symbol (D', D) entschieden wird und zumindest einer der Regelungsparameter (ΔR, ρ, tᵢ) für spätere Entscheidungen angepasst wird, **dadurch gekennzeichnet, dass**
- dem Entscheider (15'; 15*) ein vorläufiger, insbesondere geschätzter Korrekturwinkel für eine momentane Rotation unabhängig von einer Regelung eines lokalen Oszillators als Regelungsparameter (ρ) zugeführt wird.

2. Verfahren nach Anspruch 1, bei dem
- mit dem oder mit einem weiteren Entscheider (15'; 15c*) ein Parameter und/oder ein Symbol (D') entschieden wird, welcher bzw. welches zum Anpassen der Regelungsparameter (ΔR, ρ, tᵢ) verwendet wird, und
- dazu eine Vorverarbeitung des empfangenen Signals (A) zum Vorrotieren des empfangenen Signals (A) durch Einstellen oder Ändern des Korrekturwinkels (ρ) vor dem Zuführen zu dem Entscheider (15') und/oder
- dazu eine Vorverarbeitung eines schaltungsinternen Entscheidungsgitters (E) durch dessen Rotation und Zuführung zum Entscheider (15c*) und das Zuführen des empfangenen Signals (A) zu diesem durchgeführt wird.

3. Verfahren nach Anspruch 1 oder 2, bei dem ein Wertevergleich von zumindest Signalanteilen vor und nach dem Entscheider (15' ; 15c*) zur Bestimmung eines Abweichungswertes des Winkels (ρ) und/oder der Amplitude (ΔR) zwischen empfangenem Signal (A, A') und dem System der Schaltungsanordnung (1) durchgeführt wird, welcher zur Korrektur bei nachfolgenden Schritten verwendet wird.

4. Verfahren nach Anspruch 3, bei dem in einer Filtereinrichtung (33) eine Verarbeitung zur Überprüfung des Verhältnisses einer zuvor verwendeten Rotation (ρ) bei einer Korrekturwinkelbestimmung und dem daraus resultierenden Abweichungswert (Aρ + ρ) verwendet wird.

5. Verfahren nach einem der Ansprüche 3 - 6, bei dem für Frequenzregelung ein Integrator einen Frequenzoffset (dρ/dt) berücksichtigt, solange ein Versatz (dρ/dt ≠ 0) des Trägers detektiert wird.

6. Verfahren nach Anspruch 5, bei dem nach Bestimmung ausreichend genauer Frequenzabweichung mit einem ermittelten Kippwinkel als Regelungsparameter (ρ) eine Umschaltung von Frequenz- auf Phasenregelung durchgeführt wird.

7. Verfahren nach einem vorstehenden Anspruch, bei dem die Verarbeitung im Entscheider (15'; 15c*) im polaren Koordinatenraum (R, α) durchgeführt wird.

8. Verfahren nach einem vorstehenden Anspruch, bei dem
- in einem ersten Schritt als Korrekturwinkel ein beliebiger oder vorgegebener Kippwinkel (ρ) als vorbestimmter Regelungsparameter zum Vorrotieren für eine erste Schätzung verwendet wird,
- die Schätzung eines weiteren Kippwinkels (ρ) durch Korrektur der letzten Schätzung mit einem bestimmten Winkelfehler (Δρ) eines weiteren mit dem Entscheider (15'; 15c*) bestimmten empfangenen Signals (A) durchgeführt wird und
- zur Bestimmung des neuen Korrekturwinkels (ρ) eine Filterung und eine Plausibilitätskontrolle der vorherigen Korrektur durchgeführt werden.

9. Verfahren nach einem vorstehenden Anspruch, bei dem das Symbol (D') zur weiteren Verarbeitung durch Rückrotation um den Kippwinkel (ρ) in das Koordinatensystem des empfangenen Signals (A) gebracht wird.

10. Verfahren nach einem vorstehenden Anspruch, bei dem das Symbol (D') oder ein daraus abgeleitetes Signal (ρ) zur weiteren Verarbeitung als Eingangssignal für eine Trägerfrequenz- oder Träger-Phasenregelung (8) verwendet wird.

11. Verfahren nach einem vorstehenden Anspruch, bei dem als Eingangssignal für eine Trägerfrequenz- oder Träger-Phasenregelung (8) eine Winkeldifferenz zwischen empfangenem Signal (A) und dem rückrotierten Symbol (D) oder ein daraus abgeleitetes Signal verwendet wird.

12. Verfahren nach einem vorstehenden Anspruch, bei dem das Symbol (D; D') oder ein daraus abgeleitetes Signal als Eingangssignal für eine Regelungseinrichtung (21) zum Einstellen einer Abtastratenfrequenz und/oder -phase verwendet wird.

13. Verfahren nach einem vorstehenden Anspruch, bei dem das Symbol oder ein daraus abgeleitetes Signal (D; D') als ein Eingangssignal für eine Regeleinrichtung (43) eines Entzerrers (14) verwendet wird.

14. Verfahren nach einem vorstehenden Anspruch, bei dem ein aus dem Symbol abgeleitetes Signal, insbesondere eine Radiuskomponente (ΔR), einer Regelungseinrichtung (43) für eine entscheidungsrückgekoppelte Verstärkungsregeleinrichtung (12) zugeführt wird.

15. Schaltungsanordnung (1) mit einer Schaltung (50; 50*) zum Synchronisieren der Schaltungsanordnung (1) beim Empfang eines in den mehrdimensionalen komplexen Signalraum gemischten, modulierten Signals (sa, sd), mit
- einem Entscheider (15'; 15*) zum Analysieren eines Empfangssignals (sa, sd, A) im komplexen Koordinatenraum (I,Q) unter Verwendung von Regelungsparametern (R, ρ, tᵢ) und
- zumindest einer Regeleinrichtung (6, 7, 8, 9, 21, 10, 11, 43, 12, 14) zum Regeln einer Vorverarbeitung des Empfangssignals, **gekennzeichnet durch**
- eine Vorverarbeitungseinrichtung (30, 32; 30, 32'; 35, 33, 36) zum Rotieren des Empfangssignals (A) und/oder zum Rotieren eines Entscheidungsgitters (E') des Koordinatensystems der Schaltungsanordnung um einen vorläufigen, insbesondere geschätzten Korrekturwinkel unabhängig von einer Regelung eines lokalen Oszillators (7).

16. Schaltungsanordnung (1) nach Anspruch 15 mit dem Entscheider (15'; 15c*) zum Analysieren des rotierten Empfangssignals (A') oder des Empfangssignals (A) mit vorrotiertem Entscheidungsgitter (E') und Entscheiden eines Symbols (D', D) zum Bestimmen von zumindest einem Regelungsparameter (ρ) für zukünftige Entscheidungen.

17. Schaltungsanordnung nach Anspruch 16, bei welcher der Entscheider (15'; 15c*) außerhalb des Datenpfades angeordnet ist, in welchem ein weiterer Entscheider (15) zum Erzeugen eines auszugebenden Symbols (S) angeordnet ist, wobei beide Datenpfade ein mit einem Verfahren nach einem der Ansprüche 1 - 14 korrigiertes Empfangssignal (A) zugeführt bekommen.

18. Schaltungsanordnung nach Anspruch 15, 16 oder 17, bei der eine Regeleinrichtung (8) zum Ausregeln einer Abweichung von Trägerfrequenz und -phase einen Differenzierer zum Bilden der Ableitung und einen Integrator aufweist, wobei der Integrator (38) einen Eingang zum Zuführen eines Regelungsparameters (ρ) oder der Ableitung (dρ/dt, 36) davon oder eines daraus gebildeten Signals (dρ/dt) aufweist.
